# EUROPEAN PATENT SPECIFICATION

(11) **EP 4 567 662 B1**
(45) Date of publication and mention of the grant of the patent: **26.08.2026**
(21) Application number: 23307156.2
(22) Date of filing: 08.12.2023
(51) Int. Cl.: G06K 19/07

(54) **FRONT-END CIRCUIT FOR AN RFID TRANSPONDER**
FRONTENDSCHALTUNG FÜR EINEN RFID-TRANSPONDER
CIRCUIT FRONTAL POUR TRANSPONDEUR RFID

(43) Date of publication of application: 11.06.2025
(73) Proprietor: NXP B.V., 5656 AG Eindhoven (NL)
(72) Inventor: Zoescher, Lukas, 31023 Toulouse (FR); Maschera, Davide, 31023 Toulouse (FR); Henes Neto, Egas Carvalho, 31023 Toulouse (FR); Boitard, Fabien, 31023 Toulouse (FR)
(74) Representative: Krott, Michel

(56) References cited:
- EP-A1- 2 963 587
- EP-A2- 3 336 773
- US-A1- 2021 248 331

## Description

### TECHNICAL FIELD

The present disclosure relates to a front-end circuit for a radio frequency identification (RFID) transponder. Furthermore, the present disclosure relates to a corresponding method of operating a front-end circuit for an RFID transponder.

### BACKGROUND

RFID transponders may support a feature to intentionally reduce the maximum operating range in response to an RFID reader command, for example, to safeguard privacy. In order to enable this feature, an RFID transponder should determine whether the received power level exceeds a predefined power threshold or not.

EP 3 336 773 A2 describes a voltage regulation circuit for an RFID circuit, the voltage regulation circuit comprising: an input connectable to a rectifier circuit, an output connectable to a processor of the RFID circuit, at least one switch arranged between the input and the output and connected to the input and the output, wherein the switch is capable to electrically connect the output to the input and to disconnect the output from the input.

US 2021/248331 A1 describes an RFID transponder, which includes a current control module for controlling a current consumption of a memory based on an amount of available power, and a control logic for controlling a memory operation in response to the control of the current consumption by the current control module. The RFID transponder further includes a power detector that is configured to continuously monitor and detect the amount of available power and output a power-dependent control signal. The power-dependent control signal is used by the RFID transponder to control the current consumption of the memory in dependence on the available power.

### SUMMARY

In accordance with a first aspect of the present disclosure, a front-end circuit for an RFID transponder is provided, as defined in claim 1.

In one or more embodiments, the level detector is further configured to generate an output signal, wherein said output signal is indicative of a result of comparing the level of the additional output signal of the voltage limiter with the predefined reference level.

In one or more embodiments, the level detector and/or the additional output signal of the voltage limiter are configured to be enabled by a digital control circuit comprised in the RFID transponder.

In one or more embodiments, the level detector and/or the additional output signal of the voltage limiter are configured to be enabled during a boot-up of an integrated circuit comprised in the RFID transponder.

In one or more embodiments, the level detector and/or the additional output signal of the voltage limiter are configured to be enabled in response to a command received from an external reader device.

In one or more embodiments, the level detector and/or the additional output signal of the voltage limiter are permanently enabled.

In one or more embodiments, the level detector and/or the additional output signal of the voltage limiter are periodically enabled.

In one or more embodiments, the additional output signal of the voltage limiter is a current or a voltage.

In one or more embodiments, the rectifier, voltage limiter and level detector have configurable circuit parameters.

In one or more embodiments, an RFID transponder comprises a front-end circuit of the kind set forth, and an integrated circuit operatively coupled to an output of the voltage limiter.

In one or more embodiments, the integrated circuit is configured to refrain from responding to a command received from an external reader if the level of the additional output signal of the voltage limiter is below the predefined reference level.

In accordance with a second aspect of the present disclosure, a method of operating a front-end circuit for an RFID transponder is conceived, as defined in claim 12.

In one or more embodiments, the level detector generates an output signal, wherein said output signal is indicative of a result of comparing the level of the additional output signal of the voltage limiter with the predefined reference level.

### DESCRIPTION OF DRAWINGS

Embodiments will be described in more detail with reference to the appended drawings.
Fig. 1 shows a graph displaying a relationship between the minimum received power and operating frequency for an RFID transponder.
Fig. 2 shows an illustrative embodiment of a front-end circuit for an RFID transponder.
Fig. 3 shows an illustrative embodiment of a method of operating a front-end circuit.
Fig. 4 shows another illustrative embodiment of a front-end circuit for an RFID transponder.
Fig. 5 shows an illustrative embodiment of a part of a front-end circuit for an RFID transponder.
Fig. 6 shows another illustrative embodiment of a part of a front-end circuit for an RFID transponder.

### DESCRIPTION OF EMBODIMENTS

As mentioned above, RFID transponders - which may also be referred to as RFID tags - may support a feature to intentionally reduce the maximum operating range in response to an RFID reader command, for example, to safeguard privacy. For example, the optional untraceable command specified in the technical standard "EPC^{™} Radio-Frequency Identity Protocols Generation-2 UHF RFID Standard", version 2.1, published in July 2018, allows a reader to configure a tag in mode with reduced operating range.

The reduction of the operating range of a tag may prevent an undesirable tracking of a tag via a long distance to safeguard privacy, while still maintaining an option to read tag data or change the tag configuration at close distance. This may facilitate, for example, the handling of returns of goods in retail application scenarios. As shown in equation (1), the operating range R of a tag in the forward-link considering communication from a reader to a tag is depending on the transponder sensitivity Pₘᵢₙ. $R ∼ \sqrt{1 / {P}_{min}}$

The sensitivity corresponds to the minimum required power received by the transponder antenna to execute and respond to a reader command. A typical reader command, for example, requests a tag to read data from a non-volatile memory and to communicate the data back to the reader. However, a transponder can also intentionally reduce the operating range by increasing the effective sensitivity power level Pₘᵢₙ. This can be achieved by detecting if the received power level exceeds a specific power threshold or not.

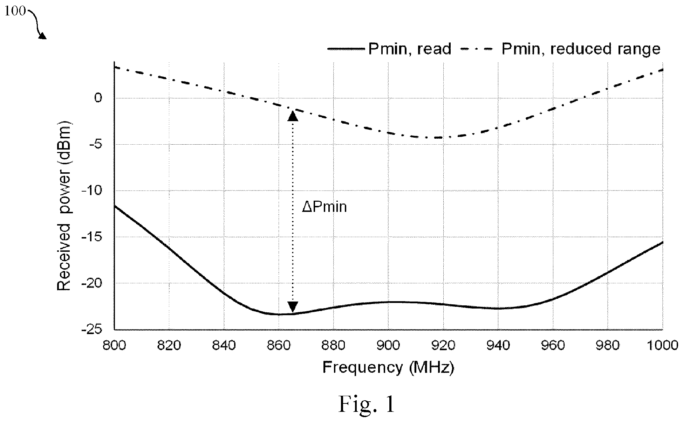

**Fig. 1** shows a graph 100 displaying a relationship between the minimum received power and operating frequency for an RFID transponder. In particular, Fig. 1 illustrates an example of the sensitivity characteristics versus frequency of an RFID transponder for a normal read command response and a command response with a reduced range. The sensitivity level is increased by a level ΔPₘᵢₙ of about 22dBm. This corresponds to a reduction of the operating range from about 16m to about 1.3m considering a maximum equivalent isotropically radiated power (EIRP) transmitter by a reader of 4W.

Thus, RFID tag integrated circuits (ICs) may implement a feature allowing the tag to be configured in a mode with reduced operating range. In order to implement this mode, a tag IC should be able to detect if the received power level exceeds a defined power threshold or not. However, the procedure to check the received power level should be executable in a fast way to not negatively impact the boot-up time of a tag IC. Furthermore, the execution of the power check procedure should not cause a change of the absorbed RF power of a tag IC, so as to minimize electromagnetic interference.

Now discussed are a front-end circuit for an RFID transponder and a corresponding method of operating a front-end circuit, which facilitate implementing a reduced operating range mode of the RFID transponder, while mitigating negative impacts on its performance.

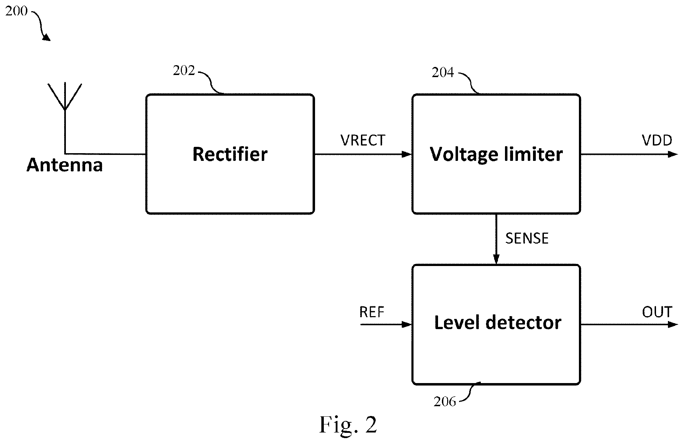

**Fig. 2** shows an illustrative embodiment of a front-end circuit 200 for an RFID transponder. The front-end circuit 200 comprises a rectifier 202, a voltage limiter 204 which is operatively coupled to the rectifier 202, and a level detector 206 which is operatively coupled to the voltage limiter 204. The rectifier 202 is configured to rectify an input voltage received from an antenna. It is noted that the antenna is external to the front-end circuit 200. In particular, the antenna may form a part of an RFID transponder into which the front-end circuit 200 may be integrated. Furthermore, the voltage limiter 204 is configured to limit an output voltage of the rectifier 202. Furthermore, the level detector 206 is configured to compare a level of an output signal of the voltage limiter 204 with a predefined reference level. The front-end circuit 200 facilitates implementing a reduced operating range mode of an RFID transponder in which it is integrated, while mitigating negative impacts on the performance of said transponder. In particular, front-end circuit 200 facilitates implementing a power check for an RFID transponder, which utilizes typical rectifier and voltage limiter circuits of an RFID transponder in combination with an additional level detector, thereby enabling circuit implementations with low layout area overhead and current consumption. Furthermore, the internal power consumption and the absorbed RF power of a transponder IC remain largely unchanged at the activation and during the operation of the front-end circuit 200. The execution of the power check therefore requires no time overhead concerning the settling of internal supply voltages and causes no electromagnetic interference due to variation of the absorbed power level.

In a specific implementation of the front-end circuit 200, the rectifier 202 rectifies and transforms the RF power received by the transponder antenna to provide a DC voltage at the output VRECT. The voltage limiter 204 that is connected to the rectifier output provides a supply voltage at its output VDD for the core circuits of the chip. In some transponder IC implementations, the voltage level at VDD may be substantially identical to the voltage at VRECT. The voltage limiter 204 limits the maximum voltage level of VRECT by dissipating the rectifier output current exceeding the current consumption of the transponder core circuits to prevent damage of circuit elements due to overvoltage. The front-end circuit 200 uses an additional output signal SENSE of the DC limiter. The level of SENSE is a function of the current dissipated by the voltage limiter 204. For example, the level of SENSE may be proportional or inversely proportional to the current dissipated by the voltage limiter 204. Signal SENSE may be a voltage or a current signal.

In accordance with the present disclosure, the level detector 206 compares the level of signal SENSE with a reference level at input REF. In a practical implementation, the level detector output OUT indicates to a digital control circuit of the tag IC if signal SENSE has exceeded the reference level at REF or not. This facilitates that the digital control circuit is triggered to limit the operating range of the tag, for example by refraining from responding to a command received from an external reader if the level of the output signal SENSE of the voltage limiter is below the predefined reference level REF.

It is noted that the voltage level at VRECT is substantially defined by the voltage limiter 204 at elevated levels of received power. The DC power consumption at rectifier output VRECT is in this case proportional to the dissipated current of the voltage limiter 204 assuming that the core current consumption is negligible in relative terms or mostly constant. The absorbed RF power at the input of the rectifier 202 is proportional to the DC power consumption at VRECT depending on the power conversion efficiency of the rectifier 202. Furthermore, the absorbed input RF power of the rectifier 202 is proportional to the received antenna power as defined by the impedance matching between the antenna and the tag IC. Thus, the level of SENSE and the threshold defined by REF are proportional to the power received at the antenna.

In one or more embodiments, the level detector and/or the output signal of the voltage limiter are configured to be enabled by a digital control circuit comprised in the RFID transponder. In this way, the power check may easily be enabled and disabled, for example depending on the application of use case of the RFID transponder. In one or more embodiments, the level detector and/or the output signal of the voltage limiter are configured to be enabled during a boot-up of an integrated circuit comprised in the RFID transponder. In this way, the power check may easily be activated, such that it is operational when the RFID transponder is being used. Furthermore, in one or more embodiments, the level detector and/or the output signal of the voltage limiter are configured to be enabled in response to a command received from an external reader device. In this way, the power check may only be activated when necessary, such that the power check itself does not consume too much energy.

In one or more embodiments, the level detector and/or the output signal of the voltage limiter are permanently enabled. In this way, the level of received power is permanently monitored. In one or more embodiments, the level detector and/or the output signal of the voltage limiter are periodically enabled. In this way, the power check may be activated regularly, while the power check itself does not consume too much energy.

The activation of the level detector and/or the output signal of the voltage limiter may be conditional on the setting of configuration bits stored in a non-volatile memory included in the RFID transponder. Configuration bits of the non-volatile memory of the RFID transponder to enable, disable, or change the behavior of the level detector and/or the voltage limiter in other ways may be changed in response to a command sent by an external reader device.

The state of output signal OUT of level detector 206 may be stored temporarily using a digital memory cell for later processing by a digital control circuit included in the RFID transponder. A digital control circuit of the RFID transponder may read the state of signal OUT or a state of signal OUT stored in a digital memory cell on the reception of a command from an external reader to decide whether to reply to the reader command or not. In such a way the effective operating range of the RFID transponder may be reduced if the RFID transponder replies only to reader commands if the level of signal SENSE has exceeded a reference level REF, as indicated by output signal OUT of level detector 206.

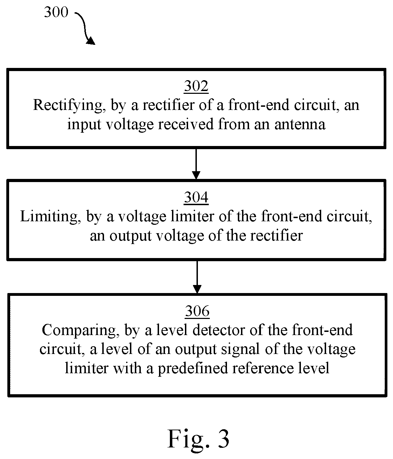

**Fig. 3** shows an illustrative embodiment of a method 300 of operating a front-end circuit. The method 300 comprises the following steps. At 302, a rectifier of the front-end circuit rectifies an input voltage received from an antenna. At 304, a voltage limiter of the front-end circuit limits an output voltage of the rectifier. Furthermore, at 306, a level detector of the front-end circuit compares a level of an output signal of the voltage limiter with a predefined reference level. As explained with reference to the corresponding front-end circuit shown in Fig. 2, the method 300 facilitates implementing a reduced operating range mode of an RFID transponder in which the front-end circuit is integrated, while mitigating negative impacts on the performance of said transponder.

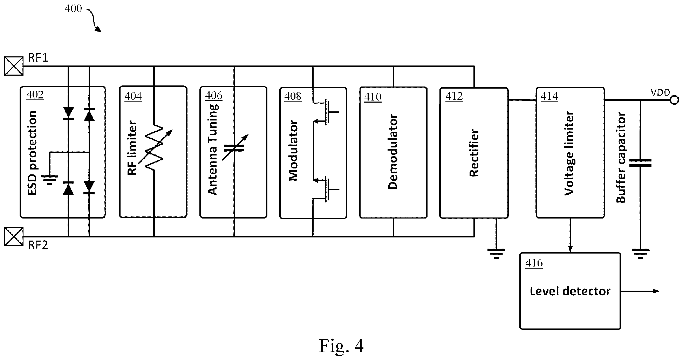

**Fig. 4** shows another illustrative embodiment of a front-end circuit 400 for an RFID transponder. In addition to the rectifier 412, voltage limiter 414 and level detector 416 of the front-end circuit shown in Fig. 2, the front-end circuit 400 shown in Fig. 4 contains an ESD protection block 402, an RF limiter 404, an antenna tuning block 406, a modulator 408, and a demodulator 410. In particular, it is shown how the power check enabled by the rectifier 412, voltage limiter 414 and level detector 416, may be implemented in a non-limiting example of a typical front-end circuit 400 for an RFID transponder.

In operation, the rectifier 412 rectifies and transforms the received RF voltage from an antenna to provide a DC supply voltage for the chip core circuits (e.g., a digital part and a non-volatile memory). The rectifier 412 may typically be implemented by a multi-staged RF charge pump. The modulator 408 modulates the input impedance to modulate the signal that is scattered back from the antenna to transmit information to a reader. Furthermore, the demodulator 410 demodulates an amplitude modulated signal transmitted by a reader. The antenna tuning block 406 tunes the chip input capacitance to maximize the power transfer from the antenna to the chip input. The electrostatic discharge (ESD) protection block 402 may typically be implemented by anti-parallel pn-junction diodes. Furthermore, the RF limiter 404 limits the RF voltage amplitude at RF1 and RF2 at high received power levels at a connected antenna. The voltage limiter 414 limits the output voltage of the rectifier and the core supply voltage. Taken together, the rectifier 412, voltage limiter 414 and level detector 416 implement a check of the received power with reference to a predefined power threshold.

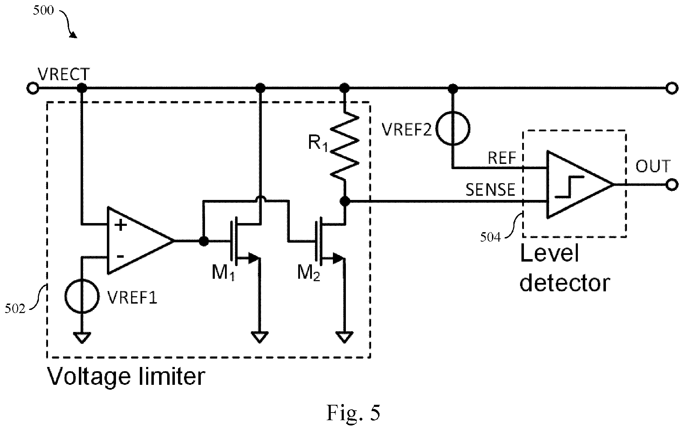

**Fig. 5** shows an illustrative embodiment of a part 500 of a front-end circuit for an RFID transponder. In particular, Fig. 5 shows a non-limiting example of an implementation of a voltage limiter 502 and a level detector 504 of the kind set forth above. The voltage limiter 502 includes a shunt transistor M₁ to dissipate excess current from supply voltage rail VRECT. The gate of M₁ is controlled by an amplifier in a closed loop configuration. As VRECT exceeds a reference voltage VREF1 provided to the amplifier, the voltage at the gate of M₁ increases and the drain current of M₁ and thus the input current at terminal VRECT rises. As a consequence, the voltage at VRECT approaches a close to constant value due to the increased input current at VRECT and the resulting voltage drop at the finite output resistance of the rectifier (not shown). The gate of a second transistor M₂ is connected to the gate terminal of M₁. The resulting drain current of M₂ is proportional to the drain current of M₁. The drain current of M₂ causes a voltage drop at R₁ that is observable at output SENSE. The observable voltage at SENSE is thus inversely proportional to the current dissipated by the voltage limiter.

The level detector 504 includes a voltage comparator that compares the voltage at input SENSE with a reference voltage VREF2 relative to the voltage level at VRECT denoted as V(VRECT). The output signal OUT indicates if the voltage at SENSE has dropped below a voltage equal to V(VRECT) - VREF2 corresponding to a specific level of dissipated current of the voltage limiter. In this example, the power detection threshold of the power check circuit is defined by reference voltage VREF2, the value of resistor R₁, the ratio of transistor dimensions of M₁ and M₂, the voltage level of VRECT as defined by reference voltage VREF1, the power conversion efficiency of the rectifier, and the impedance matching between the transponder antenna and the transponder IC. A practical transponder IC implementation may provide means to configure these circuit parameters to adjust the power detection threshold. For example, a practical implementation of the invention may include switches to switch separate sections of resistor Ri or transistor M₂ to adjust the power detection threshold.

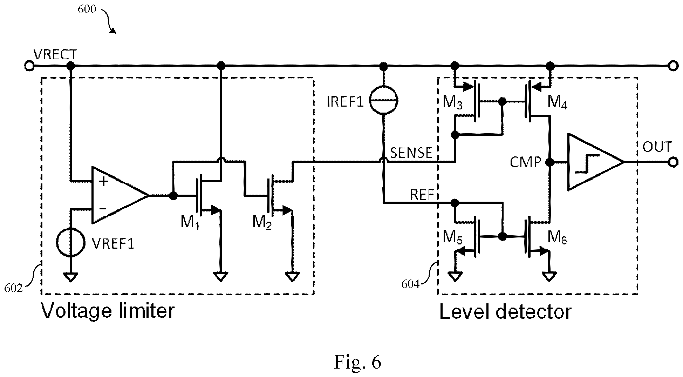

**Fig. 6** shows another illustrative embodiment of a part 600 of a front-end circuit for an RFID transponder. In particular, Fig. 6 shows another non-limiting example of an implementation of a voltage limiter 602 and a level detector 604 of the kind set forth above. It is noted that the operation of the voltage limiter 602 is similar to the voltage limiter shown in Fig. 5. The gate of transistor M₂ is connected to the gate of transistor M₁ in the same manner as in the circuit of Fig. 5. As a result, the output current at terminal SENSE is proportional to the current that is dissipated via transistor M₁, depending on the ratio of transistor dimensions of M₁ and M₂.

The level detector 604 compares the current level at input SENSE with a reference current IREF1. Signal SENSE is connected to the input of a current mirror consisting of PMOS transistors M₃ and M₄. The output of the current mirror, more specifically the drain of transistor M₄, is connected to node CMP. CMP is furthermore connected to the output of an NMOS current mirror including transistors M₅ and M₆. The input of the NMOS current mirror is connected to a reference current IREF1. If the magnitude of the output current of the PMOS current mirror exceeds the magnitude of the output current of the NMOS current mirror the voltage at CMP rises. The voltage at CMP is amplified by a voltage amplifier to a digital signal level at output OUT. In this example, the power detection threshold of the power check circuit is defined by the ratio of transistor dimensions of M₁ and M₂, the voltage level of VRECT as defined by reference voltage VREF1, the power conversion efficiency of the rectifier, the impedance matching between the transponder antenna and the transponder IC, the PMOS and NMOS current mirror transistor ratios and the level of the reference current IREF1. A practical transponder IC may provide means to configure these circuit parameters to adjust the power detection threshold.

It is noted that the reference voltages VREF1, VREF2, the reference current IREF1 or combinations of them as shown in the schematics of Fig. 5 and Fig. 6 may be implemented in a way to achieve a desired temperature behavior to compensate the power detection threshold with respect to temperature drifts of other circuit components or sub-circuits such as the rectifier.

Furthermore, it is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: minimum received power versus frequency
- 200: front-end circuit
- 202: rectifier
- 204: voltage limiter
- 206: level detector
- 300: method of operating a front-end circuit
- 302: rectifying, by a rectifier of a front-end circuit, an input voltage received from an antenna
- 304: limiting, by a voltage limiter of the front-end circuit, an output voltage of the rectifier
- 306: comparing, by a level detector of the front-end circuit, a level of an output signal of the voltage limiter with a predefined reference level
- 400: front-end circuit
- 402: ESD protection
- 404: RF limiter
- 406: antenna tuning
- 408: modulator
- 410: demodulator
- 412: rectifier
- 414: voltage limiter
- 416: level detector
- 500: part of a front-end circuit
- 502: voltage limiter
- 504: level detector
- 600: part of a front-end circuit
- 602: voltage limiter
- 604: level detector

## Claims

1. A front-end circuit (200) for a radio frequency identification, RFID, transponder, the front-end circuit (200) comprising:
a rectifier (202) configured to rectify an input voltage received from an antenna;
a voltage limiter (204) operatively coupled to the rectifier (202), said voltage limiter being configured to limit an output voltage of the rectifier (202) and to output the limited output voltage as an output signal;
**characterized in that** the front-end circuit (200) further comprises a level detector (206) operatively coupled to the voltage limiter (204), said level detector (206) being configured to compare a level of an additional output signal of the voltage limiter (204) with a predefined reference level, wherein the additional output signal of the voltage limiter (204) is a function of a current dissipated by the voltage limiter (204).

2. The front-end circuit (200) of claim 1, wherein the level detector (206) is further configured to generate an output signal, wherein said output signal is indicative of a result of comparing the level of the additional output signal of the voltage limiter (204) with the predefined reference level.

3. The front-end circuit (200) of claim 1 or 2, wherein the level detector (206) and/or the additional output signal of the voltage limiter (204) are configured to be enabled by a digital control circuit comprised in the RFID transponder.

4. The front-end circuit (200) of claim 3, wherein the level detector (206) and/or the additional output signal of the voltage limiter (204) are configured to be enabled during a boot-up of an integrated circuit comprised in the RFID transponder.

5. The front-end circuit (200) of claim 3, wherein the level detector (206) and/or the additional output signal of the voltage limiter (204) are configured to be enabled in response to a command received from an external reader device.

6. The front-end circuit (200) of claim 1 or 2, wherein the level detector (206) and/or the additional output signal of the voltage limiter (204) are permanently enabled.

7. The front-end circuit (200) of claim 1 or 2, wherein the level detector (206) and/or the additional output signal of the voltage limiter (204) are periodically enabled.

8. The front-end circuit (200) of any preceding claim, wherein the additional output signal of the voltage limiter (204) is a current or a voltage.

9. The front-end circuit (200) of any preceding claim, wherein the rectifier (202), voltage limiter (204) and level detector (206) have configurable circuit parameters.

10. An RFID transponder comprising the front-end circuit (200) of any preceding claim and an integrated circuit operatively coupled to an output of the voltage limiter (204).

11. The RFID transponder of claim 10, wherein the integrated circuit is configured to refrain from responding to a command received from an external reader if the level of the additional output signal of the voltage limiter (204) is below the predefined reference level.

12. A method (300) of operating a front-end circuit for a radio frequency identification, RFID, transponder, the front-end circuit comprising a rectifier, a voltage limiter and a level detector, and the method comprising:
rectifying (302), by the rectifier, an input voltage received from an antenna;
limiting (304), by the voltage limiter, an output voltage of the rectifier and outputting the limited output voltage as an output signal;
**characterized in that** the method further comprises comparing (306), by the level detector, a level of an additional output signal of the voltage limiter with a predefined reference level, wherein the additional output signal of the voltage limiter is a function of a current dissipated by the voltage limiter.

13. The method (300) of claim 12, wherein the level detector generates an output signal, wherein said output signal is indicative of a result of comparing the level of the additional output signal of the voltage limiter with the predefined reference level.

## Patentansprüche

1. Frontend-Schaltung (200) für einen Hochfrequenzidentifikations- bzw. RFID-Transponder, wobei die Frontend-Schaltung (200) Folgendes umfasst:
einen Gleichrichter (202), ausgelegt zum Gleichrichten einer von einer Antenne empfangenen Eingangsspannung;
einen wirksam mit dem Gleichrichter (202) gekoppelten Spannungsbegrenzer (204), wobei der Spannungsbegrenzer ausgelegt ist zum Begrenzen einer Ausgangsspannung des Gleichrichters (202) und Ausgeben der begrenzten Ausgangsspannung als ein Ausgangssignal;
**dadurch gekennzeichnet, dass** die Frontend-Schaltung (200) ferner einen wirksam mit dem Spannungsbegrenzer (204) gekoppelten Pegeldetektor (206) umfasst, wobei der Pegeldetektor (206) ausgelegt ist zum Vergleichen eines Pegels eines zusätzlichen Ausgangssignals des Spannungsbegrenzers (204) mit einem vordefinierten Referenzpegel, wobei das zusätzliche Ausgangssignal des Spannungsbegrenzers (204) Funktion eines Stroms ist, der durch den Spannungsbegrenzer (204) dissipiert wird.

2. Frontend-Schaltung (200) nach Anspruch 1, wobei der Pegeldetektor (206) ferner ausgelegt ist zum Erzeugen eines Ausgangssignals, wobei das Ausgangssignal ein Ergebnis des Vergleichens des Pegels des zusätzlichen Ausgangssignals des Spannungsbegrenzers (204) mit dem vordefinierten Referenzpegel angibt.

3. Frontend-Schaltung (200) nach Anspruch 1 oder 2, wobei der Pegeldetektor (206) und/oder das zusätzliche Ausgangssignal des Spannungsbegrenzers (204) dafür ausgelegt sind, durch eine in dem RFID-Transponder enthaltene digitale Steuerschaltung aktiviert zu werden.

4. Frontend-Schaltung (200) nach Anspruch 3, wobei der Pegeldetektor (206) und/oder das zusätzliche Ausgangssignal des Spannungsbegrenzers (204) dafür ausgelegt sind, während eines Hochfahrens einer in dem RFID-Transponder enthaltenen integrierten Schaltung aktiviert zu werden.

5. Frontend-Schaltung (200) nach Anspruch 3, wobei der Pegeldetektor (206) und/oder das zusätzliche Ausgangssignal des Spannungsbegrenzers (204) dafür ausgelegt sind, als Reaktion auf einen von einer externen Lesevorrichtung empfangenen Befehl aktiviert zu werden.

6. Frontend-Schaltung (200) nach Anspruch 1 oder 2, wobei der Pegeldetektor (206) und/oder das zusätzliche Ausgangssignal des Spannungsbegrenzers (204) permanent aktiviert sind.

7. Frontend-Schaltung (200) nach Anspruch 1 oder 2, wobei der Pegeldetektor (206) und/oder das zusätzliche Ausgangssignal des Spannungsbegrenzers (204) periodisch aktiviert werden.

8. Frontend-Schaltung (200) nach einem der vorhergehenden Ansprüche, wobei das zusätzliche Ausgangssignal des Spannungsbegrenzers (204) ein Strom oder eine Spannung ist.

9. Frontend-Schaltung (200) nach einem der vorhergehenden Ansprüche, wobei der Gleichrichter (202), der Spannungsbegrenzer (204) und der Pegeldetektor (206) konfigurierbare Schaltungsparameter aufweisen.

10. RFID-Transponder, der die Frontend-Schaltung (200) nach einem der vorhergehenden Ansprüche und eine wirksam mit einem Ausgang des Spannungsbegrenzers (204) gekoppelte integrierte Schaltung umfasst.

11. RFID-Transponder nach Anspruch 10, wobei die integrierte Schaltung dafür ausgelegt ist, es zu unterlassen, auf einen von einem externen Lesegerät empfangenen Befehl zu reagieren, wenn der Pegel des zusätzlichen Ausgangssignals des Spannungsbegrenzers (204) unter dem vordefinierten Referenzpegel liegt.

12. Verfahren (300) zum Betreiben einer Frontend-Schaltung für einen Hochfrequenzidentifikations- bzw. RFID-Transponder, wobei die Frontend-Schaltung einen Gleichrichter, einen Spannungsbegrenzer und einen Pegeldetektor umfasst, und wobei das Verfahren Folgendes umfasst:
Gleichrichten (302) einer von einer Antenne empfangenen Eingangsspannung durch den Gleichrichter;
Begrenzen (304) einer Ausgangsspannung des Gleichrichters durch den Spannungsbegrenzer und Ausgeben der begrenzten Ausgangsspannung als ein Ausgangssignal;
**dadurch gekennzeichnet, dass** das Verfahren ferner Vergleichen (306) eines Pegels eines zusätzlichen Ausgangssignals des Spannungsbegrenzers mit einem vordefinierten Referenzpegel durch den Pegeldetektor umfasst, wobei das zusätzliche Ausgangssignal des Spannungsbegrenzers Funktion eines Stroms ist, der durch den Spannungsbegrenzer dissipiert wird.

13. Verfahren (300) nach Anspruch 12, wobei der Pegeldetektor ein Ausgangssignal erzeugt, wobei das Ausgangssignal ein Ergebnis des Vergleichens des Pegels des zusätzlichen Ausgangssignals des Spannungsbegrenzers mit dem vordefinierten Referenzpegel angibt.

## Revendications

1. Circuit frontal (200) pour un transpondeur d'identification radiofréquence, RFID, le circuit frontal (200) comprenant :
un redresseur (202) configuré pour redresser une tension d'entrée reçue depuis une antenne ;
un limiteur de tension (204) couplé fonctionnellement au redresseur (202), ledit limiteur de tension étant configuré pour limiter une tension de sortie du redresseur (202) et pour fournir la tension de sortie limitée en tant que signal de sortie ;
le circuit frontal (200) étant **caractérisé en ce qu'**il comprend en outre un détecteur de niveau (206) couplé fonctionnellement au limiteur de tension (204), ledit détecteur de niveau (206) étant configuré pour comparer un niveau d'un signal de sortie additionnel du limiteur de tension (204) à un niveau de référence prédéfini, le signal de sortie additionnel du limiteur de tension (204) étant fonction d'un courant dissipé par le limiteur de tension (204).

2. Circuit frontal (200) selon la revendication 1, dans lequel le détecteur de niveau (206) est en outre configuré pour générer un signal de sortie, ledit signal de sortie indiquant un résultat de comparaison du niveau du signal de sortie additionnel du limiteur de tension (204) au niveau de référence prédéfini.

3. Circuit frontal (200) selon la revendication 1 ou 2, dans lequel le détecteur de niveau (206) et/ou le signal de sortie additionnel du limiteur de tension (204) sont configurés pour être activés par un circuit de commande numérique compris dans le transpondeur RFID.

4. Circuit frontal (200) selon la revendication 3, dans lequel le détecteur de niveau (206) et/ou le signal de sortie additionnel du limiteur de tension (204) sont configurés pour être activés lors d'un amorçage d'un circuit intégré compris dans le transpondeur RFID.

5. Circuit frontal (200) selon la revendication 3, dans lequel le détecteur de niveau (206) et/ou le signal de sortie additionnel du limiteur de tension (204) sont configurés pour être activés en réponse à une instruction reçue depuis un dispositif lecteur externe.

6. Circuit frontal (200) selon la revendication 1 ou 2, dans lequel le détecteur de niveau (206) et/ou le signal de sortie additionnel du limiteur de tension (204) sont activés en permanence.

7. Circuit frontal (200) selon la revendication 1 ou 2, dans lequel le détecteur de niveau (206) et/ou le signal de sortie additionnel du limiteur de tension (204) sont activés périodiquement.

8. Circuit frontal (200) selon l'une quelconque des revendications précédentes, dans lequel le signal de sortie additionnel du limiteur de tension (204) est un courant ou une tension.

9. Circuit frontal (200) selon l'une quelconque des revendications précédentes, dans lequel le redresseur (202), le limiteur de tension (204) et le détecteur de niveau (206) présentent des paramètres de circuit configurables.

10. Transpondeur RFID comprenant le circuit frontal (200) selon l'une quelconque des revendications précédentes et un circuit intégré couplé fonctionnellement à une sortie du limiteur de tension (204) .

11. Transpondeur RFID selon la revendication 10, dans lequel le circuit intégré est configuré pour s'abstenir de répondre à une instruction reçue depuis un lecteur externe si le niveau du signal de sortie additionnel du limiteur de tension (204) est inférieur au niveau de référence prédéfini.

12. Procédé (300) de fonctionnement d'un circuit frontal pour un transpondeur d'identification radiofréquence, RFID, le circuit frontal comprenant un redresseur, un limiteur de tension et un détecteur de niveau, et le procédé comprenant :
le redressement (302), par un redresseur, d'une tension d'entrée reçue depuis une antenne ;
la limitation (304), par le limiteur de tension, d'une tension de sortie du redresseur et la fourniture de la tension de sortie limitée en tant que signal de sortie ;
le procédé étant **caractérisé en ce qu'**il comprend en outre la comparaison (306), par le détecteur de niveau, d'un niveau d'un signal de sortie additionnel du limiteur de tension à un niveau de référence prédéfini, le signal de sortie additionnel du limiteur de tension étant fonction d'un courant dissipé par le limiteur de tension.

13. Procédé (300) selon la revendication 12, dans lequel le détecteur de niveau génère un signal de sortie, ledit signal de sortie indiquant un résultat de comparaison du niveau du signal de sortie additionnel du limiteur de tension au niveau de référence prédéfini.
